# EUROPÄISCHE PATENTSCHRIFT

(11) **EP 2 692 585 B1**
(45) Veröffentlichungstag und Bekanntmachung des Hinweises auf die Patenterteilung: **11.09.2019**
(21) Anmeldenummer: 13177286.5
(22) Anmeldetag: 19.07.2013
(51) Int. Cl.: B60R 1/00

(54) **Kameraaußengehäuse für den Einsatz in der Verkehrstechnik**
External camera external housing for use in transport technology
Boîtier extérieur de caméra utilisable dans la technique des transports

(30) Priorität: 03.08.2012 DE 102012107170
(43) Veröffentlichungstag der Anmeldung: 05.02.2014
(73) Patentinhaber: Kamera & Systemtechnik GmbH, 01796 Pirna (DE)
(72) Erfinder: Schönherr, Hans-Jörg, 01159 Dresden (DE); Steinike, Dirk, 01326 Dresden (DE); Rüdiger, Frank, 01139 Dresden (DE); Fröhlich, Jochen, 01069 Dresden (DE); Lecrivain, Gregory, 01277 Dresden (DE)
(74) Vertreter: Weissfloh, Ingo

(56) Entgegenhaltungen:
- EP-A2- 1 145 905
- WO-A2-2008/033008

## Beschreibung

Die Erfindung betrifft ein Kameraaußengehäuse für den Einsatz in der Verkehrstechnik für Fahrzeuge, die mit normalen oder hohen Geschwindigkeiten (etwa 50 bis ca. 500 km/h) fahren und den Verkehrsraum und/oder die Umgebung vor, über, seitlich neben oder hinter dem Fahrzeug während der Fahrt überwachen und/oder dokumentieren.

In zunehmenden Maße ist es aus Sicherheitsgründen erforderlich, bei schnell fahrenden Fahrzeugen den Verkehrsraum oder die Umgebung vor oder hinter dem Fahrzeug zu überwachen. Sinn und Zweck dieser Maßnahme ist es, zum Einen rechtzeitig Hindernisse zu erkennen, d. h. dass diese Technik als "visuelles Fahrassistenzsystem" fungiert und zum Anderen verschiedene Gefahrensituationen oder andere Ereignisse der Fahrt zu dokumentieren. Dies erfolgt mittels geeigneter Kameras, welche in der Regel außen an der Fahrzeughaut in gesonderten Kameragehäusen untergebracht sind, d. h., dass diese Art von Kameragehäusen aus der Fahrzeugverkleidung hervorragen, um einen möglichst breiten Sichtbereich (durch sogenannte Sichtfenster) überwachen zu können. Es sind eine Vielzahl von unterschiedlichen technischen Lösungen für die Verkehrsraumüberwachung vor schnell fahrenden Fahrzeugen, wie insbesondere für schienengebundene Fahrzeuge, auch oberhalb von Fahrgeschwindigkeiten von 350 Stundenkilometern bekannt. Das eigentliche Problem ist bei hohen Geschwindigkeiten die relativ schnelle Verschmutzung des Sichtfensters von solcherart Kameraaußengehäusen. Ursachen sind insbesondere Reste verschmutzten Regenwassers, Stäube aller Art bzw. Sandpartikel oder auch Insekten in der Luft. Diese Verschmutzungen beeinträchtigen die Sicht und damit direkt die bestimmungsgemäße Funktion der Kamera. Ein besonderes Problem für die erhebliche Abrasion eines Sichtfensters bei den genannten Kameraaußengehäusen, stellen mineralische Stäube und der beim Bremsen und Anfahren zur Reibungsverbesserung ausgebrachte Bremssand dar. Solche aus harten Quarzsanden bestehende Bremssande werden bei der Benutzung im Schienenfahrzeugbetrieb zu Feinstaub zermahlen und haben, wenn diese Partikel aufgewirbelt werden, eine hohe abrasive Wirkung nicht nur auf die Fahrzeugaußenhaut sondern auch auf die betroffenen Sichtfenster der Kameraaußengehäuse. Bekannte Lösungen, die Folgen von Verschmutzungen zu vermeiden versuchen, basieren vorrangig auf Methoden der mechanischen Reinigung (Ausnutzung des Scheibenwischerprinzips) oder auch auf den Einsatz von Druckluft. Zur Verringerung der Verschmutzung und Erhöhung der Lebensdauer des Sichtfensters werden zunehmen auch hochwertige äußere Beschichtungen aus Nanopartikeln eingesetzt. Die rein mechanische Reinigung bei hohen Geschwindigkeiten ist allerdings aufwändig bzw. aus sicherheitstechnischen Gründen oftmals nicht zulässig. Die Reinhaltung mittels Druckluft ist ebenfalls mit erheblichem technischen Aufwand zur Zuführung von Druckluft verbunden und auch aus energetischen Gründen eigentlich inakzeptabel. Nanopartikel verringern zwar das Haftenbleiben von Verschmutzungen, aber nicht das Auftreffen. D. h. das Auftreffen der in der Luft enthaltenen Partikel bewirkt eine schnelle Verunreinigung und abrasiven Verschleiß (blind werden) des Sichtfensters vor allem bei sehr hohen Geschwindigkeiten.

So ist aus der DE 100 012 004 A1 eine Einrichtung zum Sauberhalten optischer Elemente in Kraftfahrzeugen, insbesondere von Sensor- oder Kameraabdeckungen, bekannt, bei der eine transparente Abdeckung (Sichtfenster) gezielt mit Gas, wie insbesondere mit einem Luftstrom derart beaufschlagt wird, dass bei Bewegung der Abdeckung relativ zur Umgebung keine Umgebungsatmosphäre, d. h keine umströmende Luft die Oberfläche der Abdeckung erreicht. Dabei wird mittels einer speziellen Düse von der Seite aus Druckluft eingeblasen, durch die ein Querluftstrom ausgebildet werden soll. In einer anderen Variante soll eine Art Stauraum mittels eines Gegenluftstromes erzeugt werden. Zusätzlich sind auch eine Sprühdüse für eine Reinigung mit einer Flüssigkeit und eine Heizeinrichtung vorgesehen. Diese technische Lösung ist technisch und konstruktiv relativ aufwendig und bedarf einer erheblichen dauerhaften Energiezuführung, besonders bei hohen Fahrgeschwindigkeiten.

In der WO2008033008 A1 ist ein anderes Kameragehäuse beschrieben, bei dem das Sichtfenster von einer über ein äußeres Doppelgehäuse erzeugte Zwangsluftströmung gekühlt und überströmt werden soll. Hierzu sind seitlich an dem Innengehäuse der Kamera zwei in Fahrtrichtung offene Gehäuseplatten angeordnet. In die seitlichen Zwischenräume strömt die Luft ein, wird umgelenkt und über einen oben angeordneten Luftführungskanal wieder nach vorn geführt, wo mittels eines weiteren Vorsatzteils eine Umkehrung an dem Sichtfenster vorbei nach unten erfolgen soll. Dieses aufwändige Luftsammel- und Luftlenkungssystem ist allerdings nicht für hohe Geschwindigkeiten geeignet, da dieses erhebliche Geräusche und einen hohen Energiebedarf mit sich bringen würde.

Aufgabe der Erfindung ist es, ein neuartiges Kameraaußengehäuse für den Einsatz in der Verkehrstechnik zur Überwachung des Verkehrsraumes und/oder der Umgebung zu schaffen, welches sowohl bei normalen als auch bei hohen Verkehrsgeschwindigkeiten weitgehend das Auftreffen und damit das mögliche Festsetzen von Partikeln, Tropfen und Insekten auf dem Sichtfenster des Kameraaußengehäuses vermeidet, den Abtransport von trotzdem erfolgten Verschmutzungen fördert, an unterschiedlichen Stellen des Fahrzeuggehäuses außen problemlos angebaut werden kann, für einen breiten Geschwindigkeitsbereich (50 bis ca. 500 km/h) geeignet ist und die Lebensdauer eines Sichtfensters erheblich vergrößert.

Die Aufgabe wird erfindungsgemäß durch die Merkmale des ersten und zweiten Patentanspruchs gelöst. Weitere zweckmäßige Ausgestaltungen der Erfindung sind Gegenstand der weiteren rückbezüglichen Unteransprüche. Das erfindungsgemäße Kameraaußengehäuse 1 für den Einsatz in der Verkehrstechnik zur Überwachung des Verkehrsraumes und/oder der Umgebung ist durch eine besondere geometrische Form gekennzeichnet, die den medien- und partikeltragenden Luftstrom während der Fahrt über die Kameragehäusefrontfläche 2 mit einem Sichtfenster 4 wahrend der Fahrt beschleunigt, kanalisiert, an dem Sichtfenster 4 vorbeiführt und im Bereich niedriger bis hin zu sehr hohen Geschwindigkeiten (insbesondere im Bereich von ca. 50 bis ca. 500 km/h) vor allem beim Anbau des Kameraaußengehäuses 1 an der Front-, Dach- oder Seitenwand des Fahrzeuges seine schützende Wirkung entfaltet. Das neuartige Kameraaußengehäuse 1 für den Einsatz in der Verkehrstechnik zur Überwachung des Verkehrsraumes und/oder der Umgebung zum Front-, Dach-, oder Seitenwandanbau an die Außenhaut von Fahrzeugen ist so konstruiert, dass die Kameraaußengehäusefrontfläche 2 von Vorn-oben nach Unten-hinten in einem Winkelbereich zwischen +15° bis +60° gegenüber der Senkrechten zur Fahrtrichtung 17 geneigt ausgebildet ist. Die Flächennormale 23 des oberen vorderen Teils der Kameragehäusefrontfläche 11 ist nach vorn in einem Winkelbereich zwischen +10 bis -20° gegenüber der Fahrtrichtung 17 geschwenkt ausgerichtet. Die Flächennormale 23 des unteren hinteren Teils der Kameragehäusefrontfläche 12 ist in einem Winkelbereich zwischen 0° bis +30° nach hinten gegenüber der Fahrtrichtung 17 geschwenkt ausgebildet. Nach außen hin ist die Kameragehäusefrontfläche 2 weitgehend von einer vorspringenden Prallwulst 14 umschlossen. Gegenüber der Prallwulst 13 ist bevorzugt ein Prallkeil 16 so angeordnet, dass sich der Strömungsquerschnitt vor der Kameraaußengehäusefrontfläche 2 im Bereich des Sichtfensters 4 in Richtung der Abströmseite hin trichterförmig verengt. Bei dieser erfindungsgemäß besonderen konstruktiven Ausführung und den angegebenen Winkelbeziehungen der relevanten Flächen und Kameraaußengehäuseteile zueinander entsteht ein neuartiges aerodynamische Design, welches den "Selbstreinigungseffekt" des Sichtfensters erheblich verbessert. Dies bewirkt darüber hinaus eine weitgehende Vermeidung von sichtbehindernden Verschmutzungen und Abrasionen des Sichtfensters 4. Zudem ist das erfindungsgemäße Kameraaußengehäuse 1 auch in der Lage, selbst das Auftreffen von großflächigen Objekten, wie zum Beispiel bei Vogelschlag ohne wesentliche Beschädigungen und Verschmutzungen zu überstehen.

Für bestimmte Ausführungen bzw. Einsatzbedingungen kann es von Vorteil sein, wenn am Kameraaußengehäuse 1 für den Einsatz in der Verkehrstechnik in Richtung der Fahrzeugwand 5 zwischen Kameraaußengehäuse 1 und Fahrzeugwand 5 ein Prallkeil 16 und /oder eine zusätzliche Grundplatte 9 angeordnet ist, die als erhöhender Bestandteil des Prallkeils die Kanalisierung des Luftstromes verstärkt und gleichzeitig an der Fahrzeugwand fließende Wasserströme von der Kameraaußengehäusefrontfläche wegführt.

In einer anderen Ausbildung des neuartigen Kameraaußengehäuses 1 für den Einsatz in der Verkehrstechnik ist anstelle der Grundplatte 9 ein Abstandshalter 10 angeordnet. Dieser bewirkt, dass sich das Kameraaußengehäuse 1 mit der Kameraaußengehäusefrontfläche 2 immer im optimalen Strömungsbereich des Fahrtwindes zur Fahrzeugwand befindet und der "Selbstreinigungseffekt" optimal ausgenutzt werden kann.

Im Prinzip ist es auch möglich, dass das Kameraaußengehäuse 1 für den Einsatz in der Verkehrstechnik so konstruiert und ausgerichtet ist, dass das Frontgehäuseteil 20 als ein Frontgehäuseteil mit beidseitiger Prallwulst 26 ausgebildet ist. Hier ist ebenfalls nur ein Sichtfenster 4 in der Kameragehäusefrontfläche 2 angeordnet, wobei die Winkel der einzelnen Teilflächen diesem Sonderfall angepasst ausgeführt sind und die Teilflächen symmetrisch zur Mittenachse bezüglich der Prallspitze 15 in Richtung der Fahrzeugwand 5 angeordnet sind. Die Abströmseite 3 ist dann in Richtung der Fahrzeugwand 5, der Seitenwand 6, der Dachwand 7 oder der Frontwand 8 ausgebildet. Die Wirkung ist die gleiche wie bereits vorstehend ausführlich beschrieben.

Für bestimmte Anordnungen des Kameraaußengehäuses 1, wie bevorzugt auf der Dachwand (Dachbereich) für den Einsatz in der Verkehrstechnik, kann das Kameraaußengehäuse 1 an der unteren Kante des Prallkeils 16 gespiegelt als ein Doppelkameraaußengehäuse 18 ausgebildet sein.

Generell ist es auch möglich das neuartige Kameraaußengehäuse 1 für den Einsatz in der Verkehrstechnik so auszubilden, dass die Kameraaußengehäusefrontfläche 2 in verschiedene Richtungen schwenkbar ausgebildet ist.

Die Erfindung soll nachstehend in einem Ausführungsbeispiel an Hand der Figuren 1 bis 6 näher erläutert werden.
- Fig. 1 zeigt: eine Draufsicht auf ein Kameraaußengehäuse 1 mit eingezeichneten Sichtbereich einer im Inneren hinter dem Sichtfenster angeordneten Kamera
- Fig. 2 zeigt: eine Seitenansicht eines Kameraaußengehäuses 1
- Fig. 3 zeigt: zeigt eine Schrägsicht von schräg vorn auf ein Kameraaußengehäuse 1
- Fig. 4 zeigt: eine Vorderansicht auf ein Kameraaußengehäuse 1
- Fig. 5 zeigt: eine Schrägsicht von vorn auf ein Kameraaußengehäuse 1 mit einer Kameraaußengehäusefrontfläche mit beidseitiger Prallwulst 26
- Fig. 6 zeigt: eine Schrägsicht auf ein Kameraaußengehäuse 1 mit Doppelkameraaußengehäuse 18
- Fig. 7 zeigt: ein direkt angeformtes Kameraaußengehäuse 1

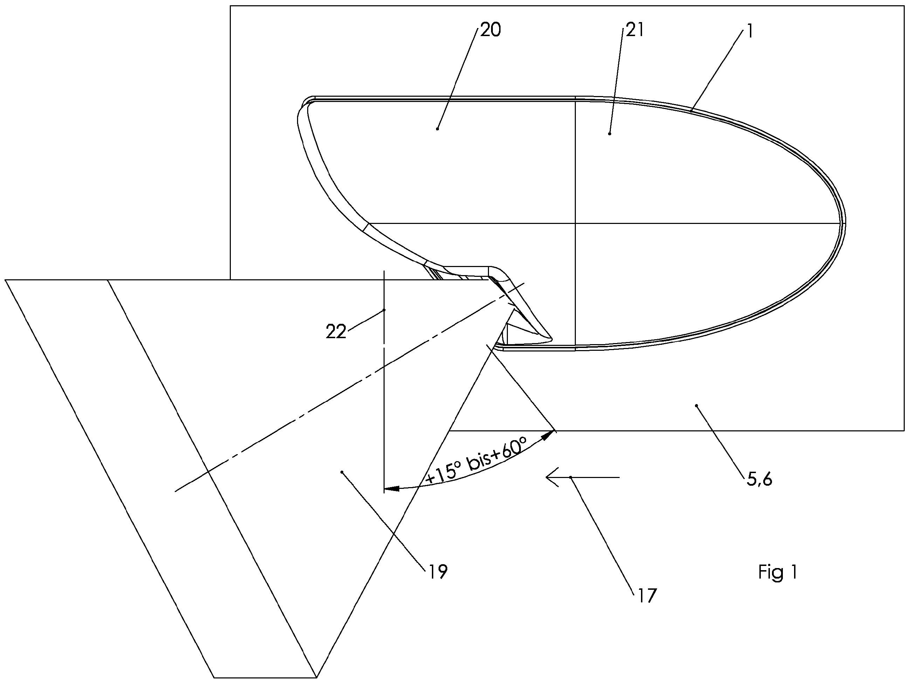

In der Figur 1 ist eine Draufsicht auf ein Kameraaußengehäuse 1 mit eingezeichneten optimierten Sichtbereich 19 einer im Inneren eingebauten Überwachungskamera oder einem Überwachungskamerasystem hinter dem Sichtfenster 4 abgebildet. Das Kameraaußengehäuse 1 ist geteilt ausgeführt. Entscheidend ist die neuartige Konstruktion des Frontgehäuseteils 20. Die Gestaltung oder Formgebung des Hintergehäuseteil 21 kann beliebig variieren. Hier sind sowohl die Fahrtrichtung 17 (Pfeil) als auch die Senkrechte zur Fahrtrichtung 22 eingezeichnet, auf die sich die Winkel der Kameragehäusefrontfläche 2 beziehen. Die Kameraaußengehäusefrontfläche 2 ist von Vorn-oben nach Unten-hinten in einem Winkelbereich zwischen +15° bis +60° gegenüber der Senkrechten 22 zur Fahrtrichtung geneigt ausgebildet.

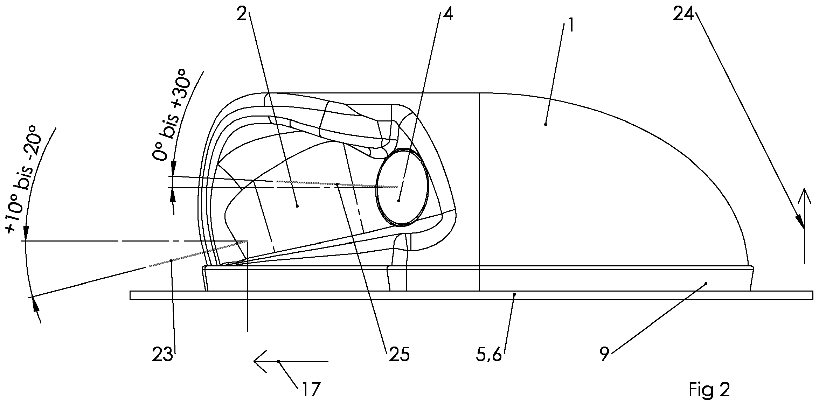

In der Figur 2 ist eine Seitenansicht eines Kameraaußengehäuses 1 dargestellt. Auf der Fahrzeugwand 5 oder Seitenwand 6 ist eine Grundplatte 9 direkt aufliegend angeordnet, welche in ihrem vorderen Bereich die Wirkung des Prallkeils 16 verstärkt. Die Anordnung wird auch durch die Angabe der Fahrzeugwandnormale 24 ersichtlich, welche rechtwinklig auf der Fahrzeugwand 5 steht. Das Sichtfenster 4 ist auf der Kameraaußengehäusefrontfläche 2 weiter außen in Richtung Abströmseite 3 versetzt so angeordnet, dass die Flächennormale 25 des unteren hinteren Teils der Kameraaußengehäusefrontfläche 12 mit dem Sichtfenster 4 in einem Winkelbereich zwischen 0° bis +30° nach hinten gegenüber der Fahrtrichtung 17 geschwenkt ausgebildet ist. Des weiteren ist die Flächennormale 23 der Kameraaußengehäusefrontfläche 2 und/oder der obere Teil der Kameraaußengehäusefrontfläche 11 nach vorn in einem Winkelbereich zwischen +10° bis -20° gegenüber der Fahrtrichtung 17 geschwenkt ausgebildet.

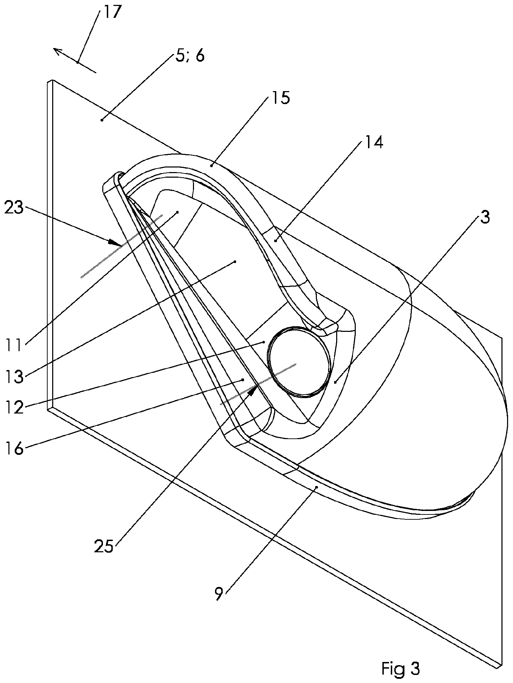

Der Übersichtlichkeit halber ist in Figur 3 eine Schrägsicht von schräg vorn auf die neuartige Ausbildung des Kameraaußengehäuses 1 und dessen Anordnung auf der Fahrzeugwand 5 oder der Seitenwand 6 gezeigt. Hier ist auch noch einmal die Flächennormale 23 der Kameraaußengehäusefrontfläche 2 und/oder des oberen Teils oder der oberen Teile der Kameragehäusefrontflächen 2 (falls die Kameraaußengehäusefrontfläche 2 in einzelne gegeneinander abgestufte Teilflächen unterteilt sind) eingezeichnet. Es ist aber generell auch ein abgerundeter nahtloser Übergang an diesen Stellen möglich. Die Flächennormale des unteren hinteren Teils der Kameraaußengehäusefrontfläche 25, die in der Regel gleichzeitig auch die Scheibennormale des Sichtfensters 4 bildet ist ebenfalls angegeben. Das Sichtfenster 4 ist in der Kameraaußengehäusefrontfläche 2 vorteilhaft relativ weit außen in der Nähe der Rundung der Abströmseite 3 angeordnet, um einen optimalen Sichtbereich 19 des innen eingebauten Kamerasystems gewährleisten zu können. Die Kameraaußengehäusefrontfläche 2 besteht hier in diesem Ausführungsbeispiel vorteilhafterweise aus einem oberen Teil der Kameragehäusefrontfläche 11, einer zwischenliegenden Übergangsfläche 13 und einem unterem hinteren Teil der Kameragehäusefrontfläche 12, d. h. sie ist praktisch dreigeteilt. Die Übergänge zwischen diesen drei Flächen verlaufen kontinuierlich, der besseren Übersichtlichkeit wegen sind hier aber Linien eingezeichnet. Die entsprechenden Winkel des oberen Teils der Kameragehäusefrontfläche 11, des unteren hinteren Teils der Kameragehäusefrontfläche 12 und der Übergangsfläche 13 sind wie vorstehend in Figur 2 bereits beschrieben ausgebildet.

Die auf die Kameragehäusefrontfläche auftreffende Luftströmung wird durch die Prallspitze 15 und die Prallwulst 14 kanalisiert. Im Zusammenhang mit dem keilförmigen Prallkeil 16 wird die Luftströmung vor den drei Flächen 11, 13 und 12 entlang geführt. Die Strömungsgeschwindigkeit nimmt dabei auf Grund des sich nach außen in Richtung der Abströmseite 3 hin verringernden Strömungsquerschnittes erheblich zu, so dass das Sichtfenster 4 von Verschmutzungen und Abrasionen weitgehend frei gehalten wird. Auf Grund der Winkelbeziehungen der einzelnen Flächen 11, 13 und 12 der Kameraaußengehäusefrontfläche 2 und der spezifischen Ausbildung und Kombination der Prallspitze 15, der Prallwulst 14 und des Prallkeils 16 entsteht im Zusammenwirken aller Merkmale eine Strömung vor dem Sichtfenster 4, welche kaum Ablagerungen auf dem Sichtfenster 4 und das nahezu berührungslose Vorbeiführen von einem Großteil der Staubkörnchen oder Fremdpartikeln vor dem Sichtfenster 4 bewirkt.

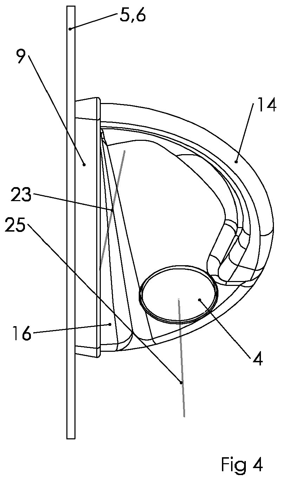

In der Figur 4 ist eine direkte Vorderansicht auf ein Kameraaußengehäuse 1 mit dem Sichtfenster 4 und der Anordnung auf der Grundplatte 9, d. h. die direkte Fahrtrichtungsansicht, gezeigt. Hier wird das Zusammenwirken von Prallspitze 15, Prallwulst 14 und Prallkeil 16 ersichtlich.

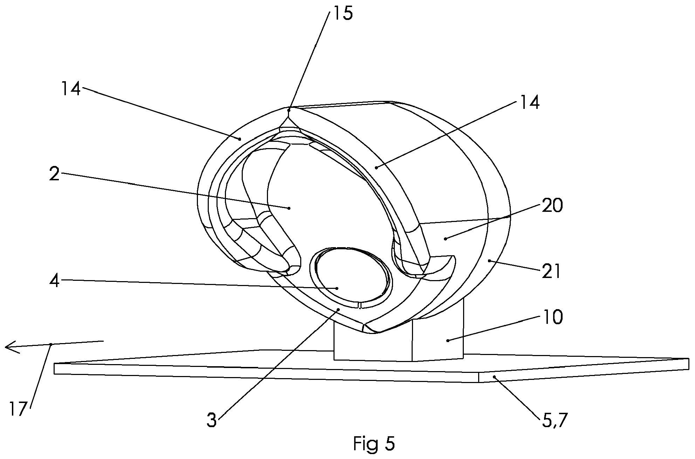

In Figur 5 ist eine Sonderausführung des neuartigen Kameraaußengehäuses 1 mit einem Sichtfenster 4 als Schrägsicht von vorn mit einer Kameraaußengehäusefrontflächenausführung mit Ausbildung zweier Prallwülste 14 abgebildet. Diese Sonderausführung kann wahlweise sowohl an die Fahrzeugwand 5, an die Seitenwand 6, an die Dachwand 7 oder an die Frontwand 8 eines Fahrzeuges angebracht werden. Insbesondere ist diese Ausbildung vorteilhaft, wenn diese Sonderausführung auf der Dachwand 7 über einen Abstandshalter 10 angeordnet ist. Die Abströmseite 3 zeigt nach unten in Richtung der Dachwand 7. Die Prallspitze 15 befindet sich oben in der Mitte und geht nach unten außen in die Prallwulst 14 über. Dieses Kameraaußengehäuse 1 ist bevorzugt symmetrisch ausgebildet und besitzt zwei Kameraaußengehäusefrontflächen 2, welche in der Mitte zusammentreffen und eine Pralllinie bilden. An dieser Stelle kann bei Bedarf auch noch ein gesonderter Prallkeil angeordnet werden. Das Frontgehäuseteil 20 ist hier anders geformt, um eine günstige Strömungsführung erzielen zu können. Das Hintergehäuseteil 21 ist wiederum beliebig ausbildbar.

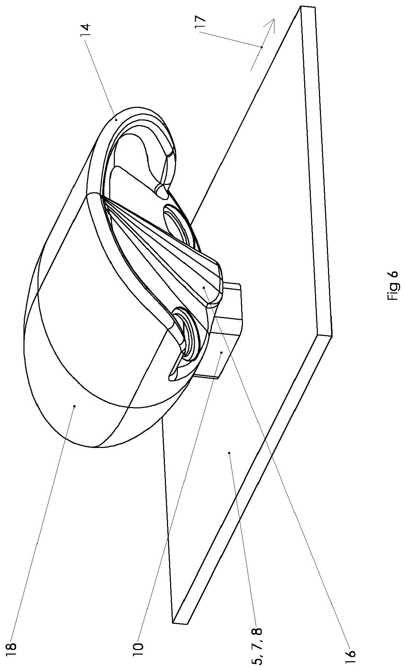

Dagegen ist in Figur 6 eine andere Sonderausführung eines Kameraaußengehäuses 1 mit einem Doppelkameraaußengehäuse 18 und zwei Sichtfenstern 4 als Schrägsicht abgebildet. Dieses Doppelkameragehäuse 18 ist bevorzug auf der Dachwand 7 oder der Frontwand 8 mittels eines Abstandshalters 10 anordenbar. Die Prallspitze 15 befindet sich oben symmetrisch in der Mitte und geht nach unten außen nahtlos in die Prallwulst 14 über. Die beiden Kameraaußengehäusefrontflächen 2 werden in der Mitte symmetrisch durch den Prallkeil 16 (praktisch zwei symmetrisch gespiegelte Prallkeile) so getrennt, das sich wieder wie bereits vorstehend beschrieben die gleichen vorteilhaften die Wirkungen für beide Sichtfenster 4 einstellen. Die beiden Kameraaußengehäusefrontflächen 2 sind in dieser besonderen Ausführung ebenfalls in einen oberen Teil der Kameragehäusefrontfläche 11, eine zwischenliegende Übergangsfläche 13 und einen unteren hinteren Teil der Kameragehäusefrontfläche 12 gegliedert, d. h. praktisch dreigeteilt ausgeführt. Es entsteht im Zusammenhang mit der Prallspitze 15, der Prallwulst 14 und dem Prallkeil 16 wieder der sich in Richtung der Abströmseite 3 verjüngende Querschnitt für die auftreffende Luftströmung.

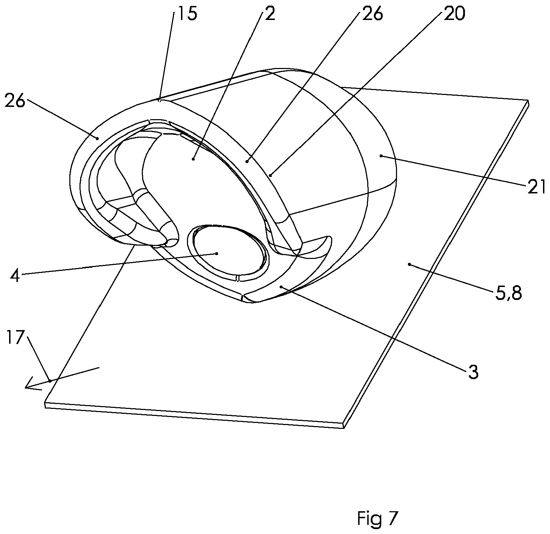

Figur 7 zeigt nochmals als Schrägsicht von vorn eine direkt angeformte Ausführung eines Kameraaußengehäuses 1 an einer Fahrzeugwand 5 oder wenn es direkt aus der Frontwand 8 heraus geformt wurde. Es besitzt ein Sichtfenster 4 und eine Art beidseitige Prallwulst 26. Die Abströmseite 3 zeigt nach unten in Richtung der Dachwand 7. Die Prallspitze 15 befindet sich oben in der Mitte und geht nach unten außen in die beidseitige Prallwulst 26 über. Dieses Kameraaußengehäuse 1 ist ebenfalls symmetrisch ausgebildet und besitzt zwei Kameraaußengehäusefrontflächen 2, welche in der Mitte zusammentreffen und eine Pralllinie bilden. Das Frontgehäuseteil 20 ist hier direkt an oder ausgeformt, um eine besonders günstige Strömungsführung erzielen zu können.

Das Hintergehäuseteil 21 des Kameraaußengehäuseteils 1 kann ebenfalls so ausgebildet und geformt sein, wie das Frontgehäuseteil 20, so dass auch nach hinten ein Sichtfenster 4 angeordnet ist und ein Kamerasystem installiert werden kann, welches bei sogenannten Wendezügen dann wiederum in die andere Fahrtrichtung einsetzbar ist.

Das neuartige Kameraaußengehäuse 1 ist vor allem für den Einsatz in der Verkehrstechnik zur Überwachung des Verkehrsraumes und/oder der Umgebung, sowohl bei normalen als auch bei hohen Verkehrsgeschwindigkeiten geeignet und universell einsetzbar.

### Bezugszeichenliste

- 1: Kameraaußengehäuse
- 2: Kameraaußengehäusefrontfläche
- 3: Abströmseite
- 4: Sichtfenster
- 5: Fahrzeugwand
- 6: Seitenwand
- 7: Dachwand
- 8: Frontwand
- 9: Grundplatte
- 10: Abstandshalter
- 11: oberer Teil der Kameragehäusefrontfläche
- 12: unterer hinterer Teil der Kameragehäusefrontfläche
- 13: Übergangsfläche
- 14: Prallwulst
- 15: Prallspitze
- 16: Prallkeil
- 17: Fahrtrichtung
- 18: Doppelkameraaußengehäuse
- 19: Sichtbereich
- 20: Frontgehäuseteil
- 21: Hintergehäuseteil
- 22: Senkrechte zur Fahrtrichtung
- 23: Flächennormale der Kameraaußengehäusefrontfläche und/oder des oberen Teils oder der oberen Teile der Kameragehäusefrontflächen
- 24: Fahrzeugwandnormale
- 25: Flächennormale des unteren hinteren Teils der Kameraaußengehäusefrontfläche und Scheibennormale des Sichtfensters
- 26: Frontgehäuseteil mit beiderseitiger Prallwulst

## Patentansprüche

1. Kameraaußengehäuse (1) für den Einsatz in der Verkehrstechnik mit mindestens einem Sichtfenster zur Überwachung des Verkehrsraumes und/oder der Umgebung zum Front-, Dach-, oder Seitenwandanbau an die Außenhaut von Fahrzeugen mit einer Kameragehäusefrontfläche (2)
**dadurch gekennzeichnet,**
**dass** die Kameraaußengehäusefrontfläche (2) von Vorn-oben nach Unten-hinten in einem Winkelbereich zwischen +15° bis +60° gegenüber der Senkrechten (22) zur Fahrtrichtung geneigt ausgebildet ist,
die Flächennormale (23) des oberen Teils der Kameraaußengehäusefrontfläche (11) nach vorn in einem Winkelbereich zwischen +10° bis -20° gegenüber der Fahrtrichtung (17) geschwenkt ausgebildet ist,
die Flächennormale (25) des unteren hinteren Teils der Kameraaußengehäusefrontfläche (12) mit dem Sichtfenster (4) in einem Winkelbereich zwischen 0° bis +30° nach hinten gegenüber der Fahrtrichtung (17) geschwenkt ausgebildet ist,
nach außen hin die Kameraaußengehäusefrontfläche (2) weitgehend von einer in Richtung der Fahrtrichtung (17) vorspringenden Prallwulst (14) umschlossen ausgebildet ist und die Kameraaußengehäusefrontfläche (2) im Bereich des Sichtfensters (4) sich in Richtung der Abströmseite (3) trichterförmig verengt.

2. Kameraaußengehäuse (1) für den Einsatz in der Verkehrstechnik nach Anspruch 1,
**dadurch gekennzeichnet,**
**dass** in Richtung der Fahrzeugwand (5) zwischen Kameraaußengehäuse (1) und Fahrzeugwand (5) ein Prallkeil (16) und/oder eine Grundplatte (9) angeordnet ist.

3. Kameraaußengehäuse (1) für den Einsatz in der Verkehrstechnik nach Anspruch 2
**dadurch gekennzeichnet,**
**dass** anstelle der Grundplatte (9) ein Abstandshalter (10) angeordnet ist.

4. Kameraaußengehäuse (1) für den Einsatz in der Verkehrstechnik nach Anspruch 1
**dadurch gekennzeichnet,**
**dass** das Frontgehäuseteil (20) als ein Frontgehäuseteil mit beiderseitiger Prallwulst (26) ausgebildet ist.

5. Kameraaußengehäuse (1) für den Einsatz in der Verkehrstechnik nach Anspruch 1
**dadurch gekennzeichnet,**
**dass** das Kameraaußengehäuse (1) an der unteren Kante des Prallkeils (16) gespiegelt als ein Doppelkameragehäuse (18) ausgebildet ist.

6. Kameraaußengehäuse (1) für den Einsatz in der Verkehrstechnik nach Anspruch 1
**dadurch gekennzeichnet,**
**dass** die Kameraaußengehäusefrontfläche (2) schwenkbar ausgebildet ist.

## Claims

1. Camera external housing (1) for use in transport technology
comprising at least one viewing window for monitoring the traffic space and/or the environment and designed to be mounted to the front, roof or side wall of the outer shell of vehicles, the camera housing front surface (2) being
**characterized in that**
the camera external housing front surface (2) from top front to bottom rear is designed to slope in the direction of travel in an angular range between +15° to +60° relative to the vertical (22),
the surface normal (23) of the upper part of the camera external housing front surface (11) is designed to tilt forwards in an angular range between +10 to -20° relative to the direction of travel (17).
the surface normal (25) of the lower rear part of the camera external housing front surface (12) with the viewing window (4) is formed to tilt rearwards in an angular range between 0° to +30° relative to the direction of travel (17),
the camera external housing front surface (2) is largely enclosed towards the exterior by a baffle ridge (14) projecting in the direction of travel (17),
and the camera external housing front surface (2) in the area of the viewing window (4) tapers in a funnel shape towards the airflow side (3).

2. Camera external housing (1) for use in transport technology according to claim 1,
**characterized in that**
a baffle wedge (16) and/or a base plate (9) are disposed between the camera external housing (1) and the vehicle wall (5) in the direction of the vehicle wall (5).

3. Camera external housing (1) for use in transport technology according to claim 2,
**characterized in that**
a spacer (10) is disposed instead of a base plate (9).

4. Camera external housing (1) for use in transport technology according to claim 1,
**characterized in that**
the front housing part (20) is formed as a front housing part with a baffle ridge (26) on both sides.

5. Camera external housing (1) for use in transport technology according to claim 1,
**characterized in that**
the camera external housing (1) is mirrored at the lower end of the baffle wedge (16) to form a dual camera housing (18).

6. Camera external housing (1) for use in transport technology according to claim 1,
**characterized in that**
the camera external housing front surface (2) is designed to pivot.

## Revendications

1. Boîtier extérieur de caméra (1) destiné à être utilisé dans le domaine du génie des transports, comprenant au moins une fenêtre de vue pour surveiller l'espace de circulation et/ou l'environnement, pouvant être monté à l'avant, sur le toit ou sur la paroi latérale du revêtement extérieur du véhicule, et le boîtier de caméra comprenant une surface frontale (2)
**caractérisé en ce que**
la surface frontale du boîtier extérieur de caméra (2) est réalisée de façon inclinée du haut avant vers le bas arrière, la plage angulaire étant entre +15° et +60° par rapport à la verticale (22) dans le sens de la marche du véhicule,
la normale à la surface (23) de la partie supérieure de la surface frontale du boîtier extérieur de caméra (11) est réalisée de manière pivotée vers l'avant, la plage angulaire étant entre +10 et -20° par rapport au sens de la marche (17),
la normale à la surface (25) de la partie arrière inférieure de la surface frontale du boîtier extérieur de caméra (12) comprenant la fenêtre de vue (4) est réalisée de manière pivotée vers l'arrière, la plage angulaire étant entre 0° et +30° par rapport au sens de la marche (17),
du côté extérieur, la surface frontale du boîtier extérieur de caméra (2) est réalisée de manière à être largement entourée par un bourrelet de rebondissement (14) en saillie vers la direction du sens de la marche (17),
et la surface frontale du boîtier extérieur de caméra (2) se rétrécit, dans la zone de la fenêtre de vue (4), en forme d'entonnoir vers la direction du côté d'écoulement (3).

2. Boîtier extérieur de caméra (1) destiné à être utilisé dans le domaine du génie des transports selon la revendication 1
**caractérisé en ce qu'**un coin de rebondissement (16) et/ou un plateau de base (9) est disposé(e) vers la direction de la paroi du véhicule (5) entre boîtier extérieur de caméra (1) et paroi du véhicule (5).

3. Boîtier extérieur de caméra (1) destiné à être utilisé dans le domaine du génie des transports selon la revendication 2
**caractérisé en ce qu'**une barre de distance (10) est disposée au lieu du plateau de base (9).

4. Boîtier extérieur de caméra (1) destiné à être utilisé dans le domaine du génie des transports selon la revendication 1
**caractérisé en ce que** la pièce frontale de boîtier (20) est réalisée comme une pièce frontale de boîtier munie des deux côtés d'un bourrelet de rebondissement (26).

5. Boîtier extérieur de caméra (1) destiné à être utilisé dans le domaine du génie des transports selon la revendication 1
**caractérisé en ce que** le boîtier extérieur de caméra (1) est réalisé comme double boîtier de caméra (18) étant réfléchi au bord inférieur de la cale de rebondissement (16).

6. Boîtier extérieur de caméra (1) destiné à être utilisé dans le domaine du génie des transports selon la revendication 1
**caractérisé en ce que** la surface frontale du boîtier extérieur de caméra (2) est réalisée de façon pivotable.
